# EUROPEAN PATENT SPECIFICATION

(11) **EP 1 627 328 B1**
(45) Date of publication and mention of the grant of the patent: **28.02.2007**
(21) Application number: 04734533.5
(22) Date of filing: 24.05.2004
(51) Int. Cl.: G06F 17/30, H04L 29/12

(54) **ENHANCEMENT OF DATABASE PERFORMANCE IN A DOMAIN NAME SYSTEM**
VERBESSERUNG DER DATENBANKLEISTUNGSFÄHIGKEIT IN EINEM DOMÄNENNAMENSYSTEM
AMELIORATION DE LA PERFORMANCE DE BASE DE DONNEES DANS UN SYSTEME DE NOM DE DOMAINE

(30) Priority: 27.05.2003 FI 20030797
(43) Date of publication of application: 22.02.2006
(73) Proprietor: Nokia Corporation, 02150 Espoo (FI)
(72) Inventor: LILLQVIST, Roy, FI-00410 Helsinki (FI); USKI, Juha, FI-01450 Vantaa (FI)
(74) Representative: Virkkala, Jukka Antero
(86) International application number: PCT/FI2004/000315
(87) International publication number: WO 2004/107207

(56) References cited:
- WO-A1-03/045074
- US-A1- 2002 083 198
- FALTSTROM P.: 'E.164 number and DNS', [Online] September 2000, CISCO SYSTEMS INC., pages 1 - 14, XP002981479 Network Working Group. Request for Comments: 2916. Category: Standards Track Retrieved from the Internet: <URL:http://www.ietf.org/rfc2916.txt?number =2916> [retrieved on 2004-09-17]

## Description

### BACKGROUND OF THE INVENTION:

### Field of the Invention:

The present invention relates to a distributed database, particularly to the Domain Name System (DNS), which is a distributed database used in the Internet. More specifically, the invention relates to a method for improving the performance of current de-facto DNS name servers, i.e., the server entities of the client-server mechanism of the DNS.

### Description of the Related Art:

As is commonly known, the Domain Name System (DNS) is a hierarchical, distributed database used in computer networks such as the Internet to translate domain names into IP addresses. The data units stored in the database are identified by domain names that are organized as an inverted tree structure called the domain name space. Each node in the tree is given a label. The domain name of a node is the sequence of the labels on the path from the node to the root node of the tree, with dots separating the labels from each other. In other words, a domain name identifies a node in the tree. The data associated with each domain name is stored in one or more Resource Records (RRs). Currently, about 20 different types of RRs are in general use. In the following, the DNS system is discussed briefly to elucidate the concepts or components, which relate to the present invention.

For decentralized administration of the domain name space, the latter is divided into areas called zones. Each zone starts at a certain node and extends to the leaf nodes of the tree or to the nodes where other zones start. Each zone is maintained and served by at least one name server termed an authoritative name server, which is responsible for the zone. An authoritative name server contains complete information for the zone that it is responsible for. In order to make the DNS tolerant for failures, a zone typically has more than one authoritative name server. The authoritative server that stores the master copy of the zone data is called a master primary server, whereas the other name servers authoritative for the same zone are called slave servers or secondary master servers. Each slave server gets the zone data from another name server authoritative for the zone. This replication process is commonly termed a zone transfer. The present invention concerns mainly the slave servers, as discussed in more detail below.

The DNS may also be utilized for identifying the services that are associated with a certain telephone number given as a standard E.164 number. As is known, the E.164 numbers are globally unique identifiers (i.e. international telephone numbers) for resources, such as telephones or fax machines, in public telecommunication networks. The name used, E.164, originates from the International Telecommunication Union (ITU) Recommendation E.164 that defines the format of the identifiers.

RFC (Request for Comments) 2916 discusses the use of the DNS for identifying available services associated with an E.164 number. This RFC document defines a protocol called ENUM that maps the international telephone number to Internet services. The DNS-based system for this mapping is in this context termed the ENUM system. When an end user enters or dials an E.164 number, the number is converted into a Fully Qualified Domain Name (FQDN) and supplied to the DNS, which returns all Name Authority Pointer (NAPTR) records associated with the FQDN. The NAPTR is one of the Resource Record types discussed above. The NAPTRs associated with a certain E.164 number and stored in the DNS include information that can be used for contacting one or more network resources associated with that number.

Current de-facto DNS servers are based on Berkeley Internet Name Domain (BIND) implementation, where the database is based on a Red-Black binary tree. A drawback related to these servers is that their performance is not optimized for the ENUM system, but the above-mentioned conversion of the telephone number into the FQDN degrades their performance. The present invention aims to eliminate this drawback, which is due to the nature of the conversion, as described below.

### SUMMARY OF THE INVENTION:

The invention seeks to improve the performance of the present de-facto name servers. The invention also seeks to optimize the performance of the current de-facto name servers for the ENUM system, or for any other queries in which the FQDNs supplied to the Domain Name System resemble the FQDNs used in the ENUM system.

In the present invention, the FQDNs received at the name server are modified before the actual database interface and the modified FQDNs are supplied to the interface. As described below, the modification is performed in connection with a zone transfer and in connection with a subsequent DNS query. In this context, the database interface refers to the points in the name server, which precede the actual database operations, i.e. an interface through which the zone data and the DNS queries are supplied to the database operations, such as insertions, deletions or searches.

Thus one embodiment of the invention is the provision of a method for enhancing database performance in a Domain Name System (DNS). The method includes the steps of receiving data to be supplied to database operations, the data including at least one domain name comprising a plurality of successive labels, the at least one domain name being in a first format and converting the at least one domain name into a second format in which at least two successive labels of a domain name are combined to form a single label. The method also provides that the data is supplied to the database operations, where the supplied data includes the at least one domain name in the second format.

In another embodiment, the invention provides a system for enhancing database performance in a Domain Name System. The system includes first means for receiving data to be supplied to database operations, the data including at least one domain name comprising a plurality of successive labels, the at least one domain name being in a first format. The system also includes second means for converting the at least one domain name into a second format in which at least two successive labels of a domain name are combined to form a single label and third means for supplying the data to database operations, the supplied data including said at least one domain name in the second format.

In another embodiment, the invention provides a name server for a Domain Name System. The name server includes a first interface for receiving data to be supplied to database operations, the data including at least one domain name comprising a plurality of successive labels, said at least one domain name being in a first format, a modification module operably connected to the first interface for converting at least one of said domain names into a second format in which at least two successive labels of a domain name form a single label and a second interface, operably connected to the modification module for supplying the data to database operations, the supplied data including at least one domain name in the second format.

In still another embodiment, the invention provides a computer program product. The computer program product comprises computer readable code configured to cause a computer to substantially perform, when executed by the computer, the above-mentioned steps of the method.

By means of the solution of the invention, the performance of the ENUM system can be improved significantly, since major internal delays caused by the above-mentioned conversion can be eliminated in the name server.

A further advantage of the invention is that the performance of the DNS name servers can be boosted in a simple and cost-efficient way. This is because the utilization of the existing server software (BIND) can be continued, and because no modifications are needed in the actual database (i.e. in the search tree).

Other features and advantages of the invention will become apparent through reference to the following detailed description and accompanying drawings.

### BRIEF DESCRIPTION OF THE DRAWINGS:

In the following, the invention and many of its embodiments are described more closely with reference to the examples shown in FIG. 1 to 6 in the appended drawings, wherein:

FIG. 1 illustrates the ENUM system by showing the utilization of the DNS when a call is initiated from an ordinary telephone;

FIG. 2 illustrates the format of a domain name in a current DNS system;

FIG. 3 illustrates how the format of the domain name of FIG. 2 is modified in the present invention;

FIG. 4 is a schematic diagram illustrating the architecture of a name server of the invention;

FIG. 5 is a flow diagram illustrating the modification of the domain name in connection with a zone transfer; and

FIG. 6 is a flow diagram illustrating the modification of the domain name in connection with a DNS query.

### DETAILED DESCRIPTION OF THE PREFERRED EMBODIMENT(S):

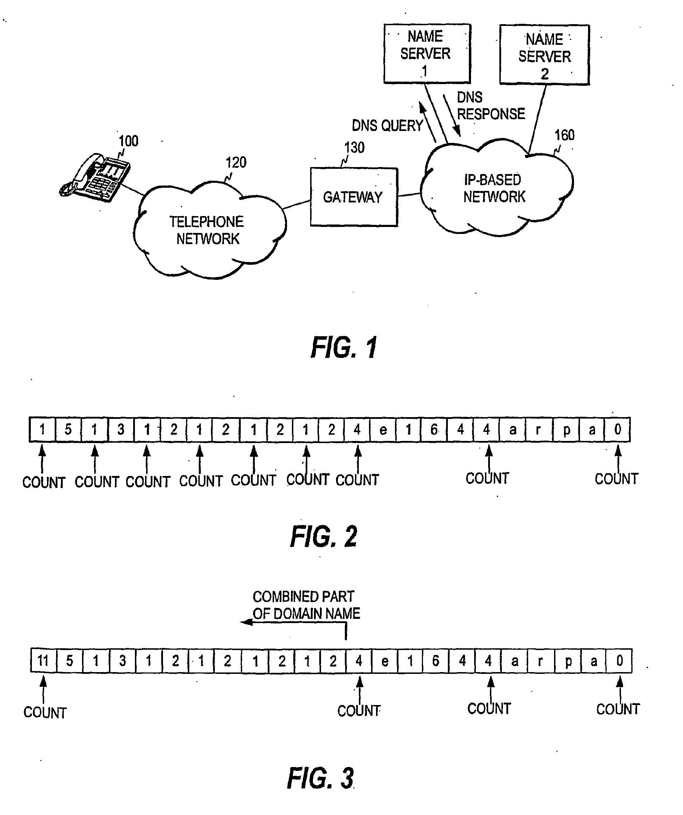

To illustrate an example of an environment where the present invention is applied, FIG. 1 shows an example of the use of the ENUM system. It is assumed in FIG. 1 that a subscriber initiates a call from an ordinary telephone 100 to another subscriber (not shown) whose international telephone number, i.e. the E.164 number, is +358-60-111-2222. The telephone network 120 first routes the call request to a gateway 130 that is the service agent for this E.164 number. Upon receiving the call request, the gateway converts the E.164 number into a FQDN. This is performed so that the digits in the E.164 number are first reversed, then dots are inserted between digits, and finally the domain "e164.arpa" is appended to the end of the string. In this case the resulting FQDN is thus 2.2.2.2.1.1.1.0.6.8.5.3.e164.arpa. The gateway then sends the DNS a standard DNS query that includes the FQDN just formed. The name server 140 that receives the query performs a search and returns, in a DNS response, all NAPTR records that correspond to the FQDN. These records specify the Internet services mapped to the E.164 number in question. For this purpose, the NAPTR records include, for example, an order field that indicates the order in which multiple NAPTR records are to be processed, and a service field that indicates a resolution protocol and service to be used, i.e., instructions on how to proceed with the call request. Based on the information received in the set of NAPTR records, the gateway then determines the resolution service that is to be used next. In this way, the processing of the call request continues according to the information received from the DNS. As the present invention does not relate to this stage of the process, but rather to the operation of the above-described name servers, the completion of the call request is not discussed in this context.

The inventors of the present invention have discovered that the nature of the conversion of the E.164 number into the FQDN degrades the performance of the de-facto name servers. As discussed above, in the ENUM system the domain names include a plurality of labels that are only one character (one byte) long. In the de-facto name servers, the search algorithm processes the domain names so that the domain name is traversed label by label from the root and each time a dot is encountered, the search is continued in a new sub-tree whose root node corresponds to the domain name of the labels already traversed. This means that the use of the ENUM system translates to an increased number of sub-trees in which the search is performed. It is assumed here that one million telephone numbers are to be mapped to corresponding Internet services. If the traditional system is utilized, which allows long labels, this can be implemented as a single tree that includes one million nodes. However, in the ENUM case in which a label consists of one number only, the search has to be performed in six different trees (one for each digit of the telephone number), each including 10 nodes (labeled from zero to nine). Since one tree can have 10 labels (one digit values from 0 to 9) the number of trees is: 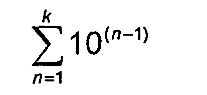 where k is the number of one-digit labels. In this case k equals six, whereby the number of possible trees is equal to 111111.

The time to find a node from a Red-Black binary tree equals to O(log n), where n is the number of nodes in the tree and O(.) is the commonly used O notation. Therefore, in the traditional case the search time equals to O(log 1000000) = 6. In the corresponding ENUM case the search time in one tree equals to O(log 10)=1. As six trees have to be used for one million telephone numbers, the total search time is equal to six, i.e. the search times are equal in both cases. However, in the ENUM case the shifts from one binary tree to another form a significant part of the total search time, since the task of switching from one tree to another is in practice more complicated than a search in one binary tree.

In current de-facto name servers the domain names are typically stored in an uncompressed wire format. The domain names also appear in this format in the DNS queries. In this format, each label is preceded by a 1-byte count that specifies the number of bytes that the domain name carries for the label that is the next one in the domain name. The domain name is terminated with a byte value of zero, which is the label of the root. FIG. 2 shows how domain name 5.3.2.2.2.2.e164.arpa is stored in this format. As can be seen, the stored domain name includes six count values of one, corresponding to six 1-byte labels.

The structure of the name data stored can also be presented as follows: 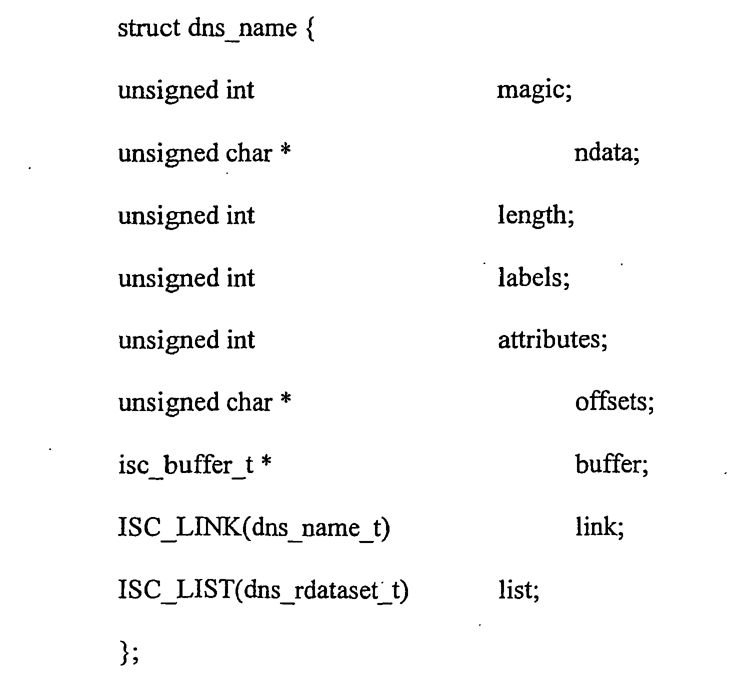 where ndata refers to the domain name data in uncompressed wire format, labels indicates the number of labels in the ndata, and offsets indicates the offset of the count-byte of label number x. The count of the labels starts from the side opposite to the root label, the first label having a value of zero.

In the example of FIG. 2, the labels and offsets values are the following:
- labels = 9,
- offsets: offsets[label=0]=0, offsets[label=1]=2, offsets[label=2]=4, offsets[label=3]=6, etc.,
- ndata values with the above offsets are: ndata[offsets=0]=1, ndata[offisets=2]=1, ndata[offsets=4]=1, etc.

In this example of the present invention, the performance of the name servers is enhanced by modifying the domain names so that a certain number of labels are combined to form a single label. The modification begins from a given origin and it is performed so that the first count value of the wire format (i.e. ndata[offset=0]) is changed to a value that corresponds to the sum of the number of bytes in the labels to be combined and in the counts between said labels. In other words, the first count is changed to a value that corresponds to the total number of bytes in the combined label. FIG. 3 shows how the domain name shown in FIG. 2 is modified assuming that the desired origin is e164.arpa. In this case the total number of bytes in the labels to be combined is six (5.3.2.2.2.2) and the number of bytes in the intermediate counts is five. Thus, the first count in the name is given the value of eleven, which indicates that the next eleven bytes form the label that follows the first count.

In the above example, the labels and offsets values are thus modified as follows:
- labels = 4,
- offsets: offsets[label=0]=0, offsets[label=1]=12, offsets[label=2]=17, offsets[label=3]=22.
- ndata values with the above offsets are: ndata[offsets=0]=11, ndata[offsets=12]=4, ndata[offsets=17]=4, ndata[offsets=22]=0.

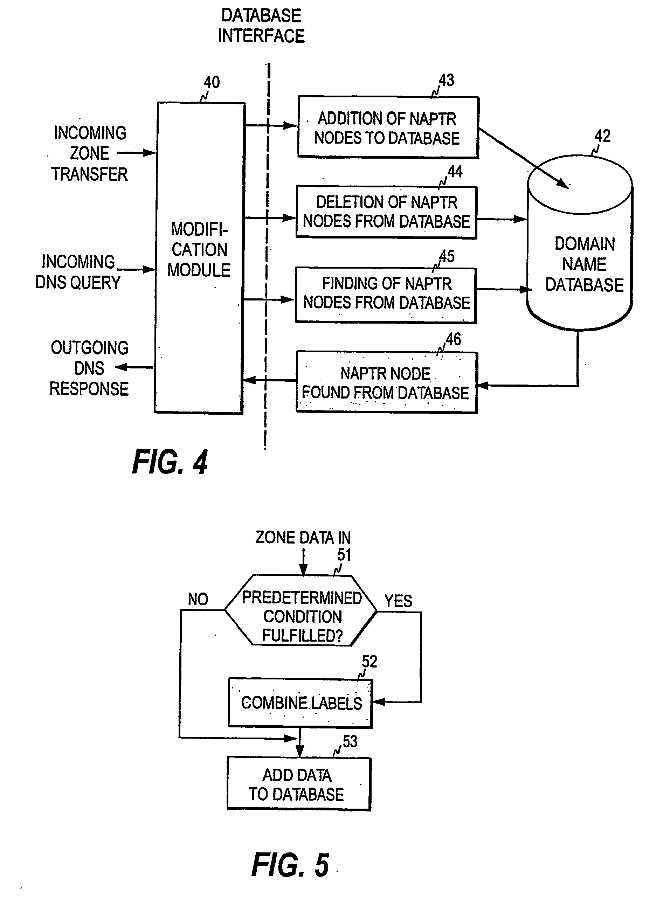

FIG. 4 is a schematic representation of the architecture of one example of a name server of the invention. In the present invention, a separate modification module 40 is introduced into the name server so that the module precedes the actual database operations, such as additions, deletions and searches, marked with reference numerals 43, 44 and 45, respectively. As mentioned above, the actual database 42 is typically a Red-Black binary tree. The modification module receives input data for database operations to be performed, the input data being received in connection with a zone transfer or a DNS query, for example. If necessary, the modification module changes the domain names included in the input data in the manner discussed above. The modification module thus examines, whether modifications are needed and performs the modifications in the affirmative case. Otherwise the module leaves the input data intact, i.e., the name server operates in a conventional manner.

When receiving a query response from the database (i.e. from module 46), the modification module returns a modified domain name into its original format. In practice, the modification module can be implemented so that it lies within normal BIND implementation, i.e. in case of incoming data certain BIND functions are also performed prior to the modification. These functions include dns_db_beginload() and beginload() in case of normal zone transfer, xfrin_recv_done() and xfr_rr() in case of incremental zone transfer, client_request() and ns_query_start() in case of a DNS query, and lookup_find() and view_find() in case of lwresd query. The function to which the DNS query response received from the database is forwarded is continue_query_find(). The stage preceding the modification module is termed a preprocessing stage in this context. The modification module may be added as a patch file to the source code of the BIND software.

The invention can be used in connection with a zone transfer and a subsequent DNS query. This is discussed in the following.

FIG. 5 is a flow diagram illustrating an example of the basic operation of the modification module in connection with a zone transfer, i.e. when an entire zone is transferred to the name server. In this case the modification module thus modifies the zone data as shown in FIG. 3, in order to assure that the zone data is stored in one binary tree. This in turn eliminates the performance problem described above as a subsequent search may be performed in one search tree.

While the zone data is being received and preprocessed, the modification module examines the NAPTR records one at a time "on the fly" to check whether they fulfill a predetermined condition set for the modification (step 51). For this, the modification module utilizes the standard format of the NAPTR records to find the relevant data within the incoming records. The predetermined condition set for the NAPTR records is typically such that the domain name has to include at least a certain number of 1-byte labels that "exceed" the origin of the zone in order for the modification to take place. For example, the modification module might combine the labels only if the domain name includes at least three 1-byte labels that "exceed" the origin. Using the above domain name (5.3.2.2.2.2.e164.arpa) as an example, and assuming that the zone origin is 2.2.2.e164.arpa, the modification module would combine the first three labels (5.3.2) in the above domain name, but no combination would be performed for a domain name 4.4.2.2.2.e164.arpa that has only two labels (4.4) beyond the origin. Thus for every NAPTR record the modification module defines the "difference" between the zone origin and the domain name and combines (step 52) the labels of the "difference", if they meet a predetermined condition.

After the check at step 51, and the possible modification at step 52, the data is added to the database (step 53).

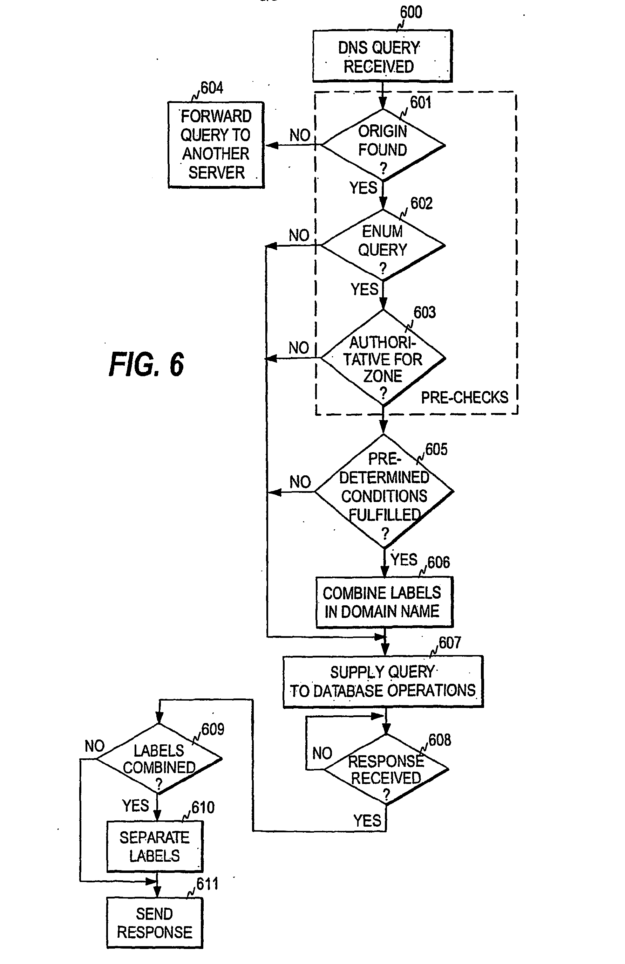

FIG. 6 is a flow diagram illustrating an example of the basic operation of the modification module in connection with an incoming DNS query. When the query data has been processed in the preprocessing stage, the modification module performs pre-checks at steps 601, 602, and 603 to find out whether the domain name is to be modified in connection with this query. First, the modification module checks whether the origin of the domain name can be found in the name server (step 601). Secondly, the modification module checks whether an ENUM query is in question (step 602), and thirdly, the modification module checks whether the name server is authoritative for the zone in question (step 603).

If all the above three conditions are met, the modification module combines the labels that exceed the domain origin in question (step 606), provided that the domain name fulfills one or more predetermined conditions, which is checked at step 605. This check corresponds to step 52 in FIG. 5, i.e. it is checked whether the label has a sufficient number of 1-byte labels beyond the origin.

The query is then supplied (step 607) to the database operations, i.e. to module 45 in FIG. 4. When the modification module receives a response from the database (step 608/yes), it examines whether the labels of the input domain name were combined previously in connection with this query (step 609). If so, the modification module separates the labels (step 610), i.e. returns the domain name to its original format by changing the first count in the domain name back to its original value. The modification module then forwards the response to the preprocessing stage (step 611). No separation of labels is performed if it is detected that the labels of the input domain name were not combined prior to the database operations. It is to be noted here that the response is handled in the above manner regardless of whether it contains an answer or not, i.e. steps 609 to 611 remain the same even if no answer is found from the database.

If the first check at step 601 indicates that the origin cannot be found in the name server, the query is forwarded to another server (step 604). If the second check at step 602 indicates that the query is not an ENUM query, the modification is skipped and the query is supplied to the database operations. Thus in this case the name server operates in a conventional manner. If the third check at step 603 indicates that the modification module is not authoritative for the zone in question, the modification is skipped and the query is supplied to the database operations. In this case the query is a recursive query which the name server has cached, i.e. the name server operates as a caching server.

The name server described above is typically a slave server. In other words, the name server receives the zone data from a master server. However, the modification of the invention may also be performed in a master server before the zone data is transmitted to a slave server, in which case no modification is needed in the slave server. However, in this case the zone transfer between the master and the slave is not fully according to the standard procedure (as modified domain names are transferred over the network).

Although the invention was described above with reference to the examples shown in the appended drawings, it is obvious that the invention is not limited to these, but may be modified by those skilled in the art without departing from the scope of the invention. For example, the solution of the invention may be used in connection with other services than the ENUM service, provided the applications produce like FQDNs with plenty of short labels. Moreover, the method is not limited to the combining of 1-byte long labels but labels of different lengths may be combined in the same way. In this case, the modification is performed when the above-described check (step 51) indicates that the domain name includes at least a predetermined number of labels beyond the given origin, and that said labels have a predetermined maximum length, which is now greater than one byte. Furthermore, it is not necessary to combine all the labels that exceed the origin, but only part of such labels may be combined.

## Claims

1. A method for enhancing database performance in a Domain Name System DNS, the method comprising the steps of:
- receiving (600) data to be supplied to database operations, the data including at least one domain name comprising a plurality of successive labels, said at least one domain name being in a first format;
- converting (606) at least one of said at least one domain name into a second format
in which at least two successive labels of the at least one of said at least one domain name are combined to form a single label; and
- supplying (607) the data to the database operations, the supplied data including at least one domain name in the second format.

2. A method according to claim 1, further comprising a step of examining whether a domain name fulfills a predetermined condition in the first format.

3. A method according to claim 2, wherein the examining step includes examining whether said domain name includes at least a predetermined number of labels beyond a given origin, said labels having a predetermined maximum length.

4. A method according to claim 3, wherein the converting step is performed for said domain name when the examining step indicates that the domain name includes at least the predetermined number of labels beyond the given origin, said labels having the predetermined maximum length, and the converting step is not performed when the examining step indicates that the domain name does not include at least the predetermined number of labels.

5. A method according to claim 3, wherein the predetermined number of labels is three.

6. A method according to claim 3, wherein the predetermined maximum length is one byte.

7. A method according to claim 5, wherein the predetermined maximum length is one byte.

8. A method according to claim 1, further comprising the steps of
- receiving data including another domain name in the second format; and
- converting the another domain name received in the second format back to the first format.

9. A system for enhancing database performance in a Domain Name System, the system comprising:
- first means for receiving data to be supplied to database operations, the data including at least one domain name comprising a plurality of successive labels, said at least one domain name being in a first format;
- second means (40) for converting at least one of said at least one domain name into a second format in which at least two successive labels of the at least one of said at least one domain name are combined to form a single label; and
- third means for supplying the data to database operations, the supplied data including at least one domain name in the second format.

10. A system according to claim 9, further comprising fourth means for examining whether a domain name fulfills a predetermined condition, the second means being configured to convert the domain name into the second format when the domain name fulfills the predetermined condition.

11. A name server for a Domain Name System, the name server comprising:
- a first interface for receiving data to be supplied to database operations, the data including at least one domain name comprising a plurality of successive labels, said at least one domain name being in a first format;
- a modification module (40) operably connected to the first interface for converting at least one of said at least one domain name into a second format in which at least two successive labels of the at least one of said at least one domain name form a single label; and
- a second interface, operably connected to the modification module for supplying the data to database operations, the supplied data including at least one domain name in the second format.

12. A computer program product, the product comprising computer readable code being configured to cause a computer to perform the steps of the method of claim 1 when executed by said computer.

## Patentansprüche

1. Verfahren zum Steigern von Datenbankleistungsfähigkeit in einem Domänen-Namens-System DNS, wobei das Verfahren die Schritte umfasst:
- Empfangen (600) von Datenbankoperationen bereitzustellenden Daten, wobei die Daten wenigstens einen Domänen-Namen enthalten, der eine Vielzahl von aufeinander folgenden Kennzeichnungen umfasst, wobei der wenigstens eine Domänen-Name in einem ersten Format vorliegt;
- Umwandeln (606) zumindest eines von den wenigstens einen Domänen-Namen in ein zweites Format, in dem mindestens zwei aufeinander folgende Kennzeichnungen des zumindest einen von den wenigstens einen Domänen-Namen kombiniert werden, um eine einzelne Kennzeichnung zu bilden; und
- Bereitstellen (607) der Daten an die Datenbankoperationen, wobei die bereitgestellten Daten wenigstens einen Domänen-Namen in dem zweiten Format enthalten.

2. Verfahren nach Anspruch 1, das weiter einen Prüfschritt, ob ein Domänen-Name eine vorbestimmte Bedingung in dem ersten Format erfüllt, umfasst.

3. Verfahren nach Anspruch 2, wobei der Prüfschritt eine Prüfung enthält, ob der Domänen-Name zumindest eine vorbestimmte Anzahl von Kennzeichnungen außerhalb einer gegebenen Quelle enthält, wobei die Kennzeichnungen eine vorbestimmte maximale Länge aufweisen.

4. Verfahren nach Anspruch 3, wobei der Umwandlungsschritt für den Domänen-Namen durchgeführt wird, wenn der Prüfschritt anzeigt, dass der Domänen-Name zumindest die vorbestimmte Anzahl von Kennzeichnungen außerhalb der gegebenen Quelle enthält, wobei die Kennzeichnungen die vorbestimmte maximale Länge aufweisen, und wobei der Umwandlungsschritt nicht durchgeführt wird, wenn der Prüfschritt anzeigt, dass der Domänen-Name nicht zumindest die vorbestimmte Anzahl von Kennzeichnungen aufweist.

5. Verfahren nach Anspruch 3, wobei die vorbestimmte Anzahl von Kennzeichnungen drei ist.

6. Verfahren nach Anspruch 3, wobei die vorbestimmte maximale Länge ein Byte ist.

7. Verfahren nach Anspruch 5, wobei die vorbestimmte maximale Länge ein Byte ist.

8. Verfahren nach Anspruch 1, das weiter die Schritte umfasst:
- Empfangen von Daten, die einen anderen Domänen-Namen in dem zweiten Format enthalten; und
- Umwandeln des in dem zweiten Format empfangenen anderen Domänen-Namens zurück in das erste Format.

9. System zum Steigern von Datenbankleistungsfähigkeit in einem Domänen-Namensystem, wobei das System umfasst:
- erste Mittel zum Empfangen von Datenbankoperationen bereitzustellenden Daten, wobei die Daten wenigstens einen Domänen-Namen enthalten, der eine Vielzahl von aufeinander folgenden Kennzeichnungen umfasst, wobei der wenigstens eine Domänen-Name in einem ersten Format vorliegt;
- zweite Mittel (40) zum Umwandeln zumindest eines von den wenigstens einen Domänen-Namen in ein zweites Format, in dem mindestens zwei aufeinander folgende Kennzeichnungen des zumindest einen von den wenigstens einen Domänen-Namen kombiniert werden, um eine einzelne Kennzeichnung zu bilden; und
- dritte Mittel zum Bereitstellen der Daten an Datenbankoperationen, wobei die bereitgestellten Daten wenigstens einen Domänen-Namen in dem zweiten Format enthalten.

10. System nach Anspruch 9, das weiter umfasst vierte Mittel zum Prüfen, ob ein Domänen-Name eine vorbestimmte Bedingung erfüllt, wobei die zweiten Mittel ausgestattet sind, den Domänen-Namen in das zweite Format umzuwandeln, wenn der Domänen-Name die vorbestimmte Bedingung erfüllt.

11. Ein Namens-Server für ein Domänen-Namens-System, wobei der Namens-Server umfasst:
- eine erste Schnittstelle zum Empfangen von Datenbankoperationen bereitzustellenden Daten, wobei die Daten wenigstens einen Domänen-Namen enthalten, der eine Vielzahl von aufeinander folgenden Kennzeichnungen umfasst, wobei der wenigstens eine Domänen-Name in einem ersten Format vorliegt;
- einen Änderungsmodul (40), das operativ mit der ersten Schnittstelle verbunden ist, zum Umwandeln wenigstens eines von den zumindest einen Domänen-Namen in ein zweites Format, in dem mindestens zwei aufeinander folgende Kennzeichnungen des zumindest einen von den wenigstens einen Domänen-Namen eine einzelne Kennzeichnung bilden; und
- eine zweite Schnittstelle, die operativ mit dem Änderungsmodul zum Bereitstellen der Daten an Datenbankoperationen verbunden ist, wobei die bereitgestellten Daten wenigstens einen Domänen-Namen in dem zweiten Format enthalten.

12. Computer-Programm-Produkt, wobei das Produkt computerlesbaren Code umfasst, der ausgestattet ist, einen Computer zu veranlassen, die Schritte des Verfahrens des Anspruchs 1 durchzuführen, wenn er auf einem Computer ausgeführt wird.

## Revendications

1. Procédé pour améliorer la performance de base de données dans un système de noms de domaine DNS, le procédé comprenant les étapes consistant à :
- recevoir (600) des données devant être fournies à des opérations de base de données, les données incluant au moins un nom de domaine comprenant une pluralité d'étiquettes successives, ledit au moins un nom de domaine étant dans un premier format ;
- convertir (606) au moins un dudit au moins un nom de domaine en un second format dans lequel au moins deux étiquettes successives d'au moins un dudit au moins un nom de domaine sont combinées pour former une seule étiquette ; et
- fournir (607) les données aux opérations de base de données, les données fournies incluant au moins un nom de domaine dans le second format.

2. Procédé selon la revendication 1, comprenant en outre une étape consistant à examiner si un nom de domaine remplit une condition prédéterminée dans le premier format.

3. Procédé selon la revendication 2, dans lequel l'étape d'examen inclut l'examen de si ledit nom de domaine inclut au moins un nombre prédéterminé d'étiquettes au-delà d'une origine donnée, lesdites étiquettes ayant une longueur maximum prédéterminée.

4. Procédé selon la revendication 3, dans lequel l'étape de conversion est exécutée pour ledit nom de domaine lorsque l'étape d'examen indique que le nom de domaine inclut au moins le nombre prédéterminé d'étiquettes au-delà de l'origine donnée, lesdites étiquettes ayant la longueur maximum prédéterminée, et l'étape de conversion n'est pas exécutée lorsque l'étape d'examen indique que le nom de domaine n'inclut pas au moins le nombre prédéterminé d'étiquettes.

5. Procédé selon la revendication 3, dans lequel le nombre prédéterminé d'étiquettes est trois.

6. Procédé selon la revendication 3, dans lequel la longueur maximum prédéterminée est un octet.

7. Procédé selon la revendication 5, dans lequel la longueur maximum prédéterminée est un octet.

8. Procédé selon la revendication 1, comprenant en outre les étapes consistant à
- recevoir des données incluant un autre nom de domaine dans le second format ; et
- reconvertir l'autre nom de domaine reçu dans le second format au premier format.

9. Système pour améliorer la performance de base de données dans un système de noms de domaine, le système comprenant :
- un premier moyen pour recevoir des données devant être fournies à des opérations de base de données, les données incluant au moins un nom de domaine comprenant une pluralité d'étiquettes successives, ledit au moins un nom de domaine étant dans un premier format ;
- un deuxième moyen (40) pour convertir au moins un dudit au moins un nom de domaine en un second format dans lequel au moins deux étiquettes successives d'au moins un dudit au moins un nom de domaine sont combinées pour former une seule étiquette ; et
- un troisième moyen pour fournir les données aux opérations de base de données, les données fournies incluant au moins un nom de domaine dans le second format.

10. Système selon la revendication 9, comprenant en outre un quatrième moyen pour examiner si un nom de domaine remplit une condition prédéterminée, le deuxième moyen étant configuré pour convertir le nom de domaine au second format lorsque le nom de domaine remplit la condition prédéterminée.

11. Serveur de noms pour un système de noms de domaine, le serveur de noms comprenant :
- une première interface pour recevoir des données devant être fournies à des opérations de base de données, les données incluant au moins un nom de domaine comprenant une pluralité d'étiquettes successives, ledit au moins un nom de domaine étant dans un premier format ;
- un module de modification (40) connecté opérationnellement à la première interface pour convertir au moins un dudit au moins un nom de domaine en un second format dans lequel au moins deux étiquettes successives d'au moins un dudit au moins un nom de domaine forment une seule étiquette ; et
- une seconde interface, connectée opérationnellement au module de modification pour fournir les données aux opérations de base de données, les données fournies incluant au moins un nom de domaine dans le second format.

12. Produit de programme informatique, le produit comprenant un code lisible par ordinateur qui est configuré pour faire qu'un ordinateur effectue les étapes du procédé de la revendication 1 lorsque exécuté par ledit ordinateur.
